# EUROPEAN PATENT SPECIFICATION

(11) **EP 4 129 557 B1**
(45) Date of publication and mention of the grant of the patent: **18.12.2024**
(21) Application number: 21774620.5
(22) Date of filing: 04.03.2021
(51) Int. Cl.: B23K 26/21, B23K 26/34, B33Y 10/00, B33Y 30/00, B29C 64/141, B29C 64/314, B29C 64/321, B22F 3/105, B22F 3/16, B22F 1/00, B22F 10/20, B22F 10/25, B22F 12/55, B29C 64/153, B33Y 40/00

(54) **MIXED POWDER PRODUCTION METHOD, MIXED POWDER PRODUCTION DEVICE, ADDITIVE MANUFACTURING METHOD, AND ADDITIVE MANUFACTURING DEVICE**
VERFAHREN ZUR HERSTELLUNG VON GEMISCHTEM PULVER, VORRICHTUNG ZUR HERSTELLUNG VON GEMISCHTEM PULVER, VERFAHREN ZUR GENERATIVEN FERTIGUNG UND VORRICHTUNG ZUR GENERATIVEN FERTIGUNG
PROCÉDÉ DE PRODUCTION DE POUDRE MÉLANGÉE, DISPOSITIF DE PRODUCTION DE POUDRE MÉLANGÉE, PROCÉDÉ DE FABRICATION ADDITIVE ET DISPOSITIF DE FABRICATION ADDITIVE

(30) Priority: 26.03.2020 JP 2020056742
(43) Date of publication of application: 08.02.2023
(73) Proprietor: Proterial, Ltd., Tokyo 135-0061 (JP)
(72) Inventor: KAWABATA, Yuji, Tokyo 108-8224 (JP); KOSEKI, Shuho, Tokyo 108-8224 (JP); SUGAWARA, Hiroki, Tokyo 108-8224 (JP)
(74) Representative: Becker, Eberhard
(86) International application number: PCT/JP2021/008546
(87) International publication number: WO 2021/192901

(56) References cited:
- WO-A1-2014/188778
- AT-B- 413 197
- CN-A- 110 548 873
- JP-A- 2005 105 414
- JP-A- S6 270 536

## Description

### Technical Field

The present invention relates to a mixed powder production method, a mixed powder production device, an additive manufacturing method, and an additive manufacturing device, which produce a mixed powder by mixing a plurality of types of powders.

### Related Art

In recent years, development of an additive manufacturing method and an additive manufacturing device in which various metal powders are mixed in advance and the mixed metal powder is used for molding has been in progress. Therefore, in order to improve the efficiency of the manufacturing process and shorten the time of the manufacturing process, there is a demand for an additive manufacturing device having a mixed powder function capable of quickly mixing a plurality of types of powders in a desired mixing ratio. For example, Patent Literature 1 discloses a technique for controlling the supply amount of powder, in which in order to distribute the pressure-fed powder to a desired supply amount in the supply passage until the powder is discharged to the heat source beam irradiation point, a branch valve is provided in the middle of the supply passage, the supply amount of powder is controlled by the opening and closing ratio of the branch valve, and the pressure-feeding force reduced by branching is compensated.

Further, Patent Literature 2 discloses a mixing technique for mixing powders, in which a material chamber with a shutter that opens and closes at the bottom and a mixing chamber provided at the lower part of the material chamber are included, multiple types of materials are stored in each of the material chambers, the supply amount is adjusted by the opening and closing area of the shutter at the bottom so that the materials have the desired mixing ratio, and the materials are mixed in the mixing chamber.

### Citation List

### Patent Literature

Patent Literature 1: Japanese Patent Laid-Open No. 2012-125772
Patent Literature 2: Japanese Patent Laid-Open No. 2017-52129

AT 413197 B relates to a new nozzle head or a new nozzle for the application of materials supplied in powder form or as powder and converted into the sintered and/or molten state essentially in the area of the nozzle opening. CN 110548873 A relates to a gradient function part forming device and method based on additional material manufacturing.

### SUMMARY OF INVENTION

### Technical Problem

However, in Patent Literature 1, it is necessary to provide a branch valve and an adjustment and control mechanism of the branch valve for each powder which results in a large-scale device, the opening and closing ratio and the actual supply amount may vary due to wear of the branch valve, and supplying a mixed powder having a desired mixing ratio is difficult because the powder is clogged in the supply flow passage due to the adhesion of the powder to the branch valve.

Further, in the method of Patent Literature 2, it is also difficult to achieve a stable mixing state quickly because the mixing ratio of materials is adjusted by the degree of opening and closing of the shutter when controlled, and the materials are dropped into the mixing chamber to be mixed.

Therefore, the objective of the present invention is to provide a mixed powder production method, a mixed powder production device, an additive manufacturing method, and an additive manufacturing device, with which a plurality of types of powders can be accurately and quickly mixed in a desired mixing ratio.

### Solution to Problem

The invention is set out in the appended set of claims. The following disclosure serves a better understanding of the present invention. The present invention provides a mixed powder production method as set out in claim 1.

Further, the present invention provides a mixed powder production device for producing a mixed powder with a plurality of types of powders as raw materials, as set out in claim 2.

Moreover, preferably, surface roughness of the inner wall of the container has an arithmetic average roughness of Ra 12.5 µm or less, and surface roughness of the outer wall of the insertion member has an arithmetic average roughness of Ra 12.5 µm or less.

Further, the present invention provides an additive manufacturing device for additive manufacturing using a mixed powder with a plurality of types of powders as raw materials, as set out in claim 4.

In addition, the present invention provides an additive manufacturing method, as set out in claim 5.

### Effects of Invention

The present invention can provide a mixed powder production method, a mixed powder production device, an additive manufacturing device, and an additive manufacturing method, with which a plurality of types of powders can be accurately and quickly mixed in a desired mixing ratio.

### BRIEF DESCRIPTION OF DRAWINGS

FIG. 1 is a schematic view of an additive manufacturing device provided with a mixed powder production device according to an embodiment of the present invention.
FIG. 2 is a schematic diagram and a partial cross-sectional view of a mixed powder production device according to an embodiment of the present invention.
FIG. 3 is an enlarged perspective view of the upper part of a mixed powder production device according to an embodiment of the present invention.
FIG. 4 is a schematic diagram showing shape examples (a) to (f) of a gap space according to an embodiment of the present invention.
FIG. 5 is a diagram showing a schematic diagram of a mixing chamber composed of divided blocks according to an embodiment of the present invention.
FIG. 6 is a schematic diagram of a pressure replenishment opening according to an embodiment of the present invention.
FIG. 7 is a schematic diagram of the flow of powders until the powders being mixed in a gap space according to an embodiment of the present invention.
FIG. 8 is a transition of the total discharge amount of the mixed powder production device of an example.
FIG. 9 is a transition of the total discharge amount of the mixed powder production device of the comparative example.

### DESCRIPTION OF EMBODIMENTS

Hereinafter, embodiments of the additive manufacturing device and the mixed powder production device according to the present invention will be described in detail with reference to the drawings. Then, the additive manufacturing method will be described together with the mixed powder production method. However, the present invention is not limited to the following embodiments. Further, in order to clarify the description, the following depiction and drawings are appropriately simplified.

### (First Embodiment)

### <Additive manufacturing device>

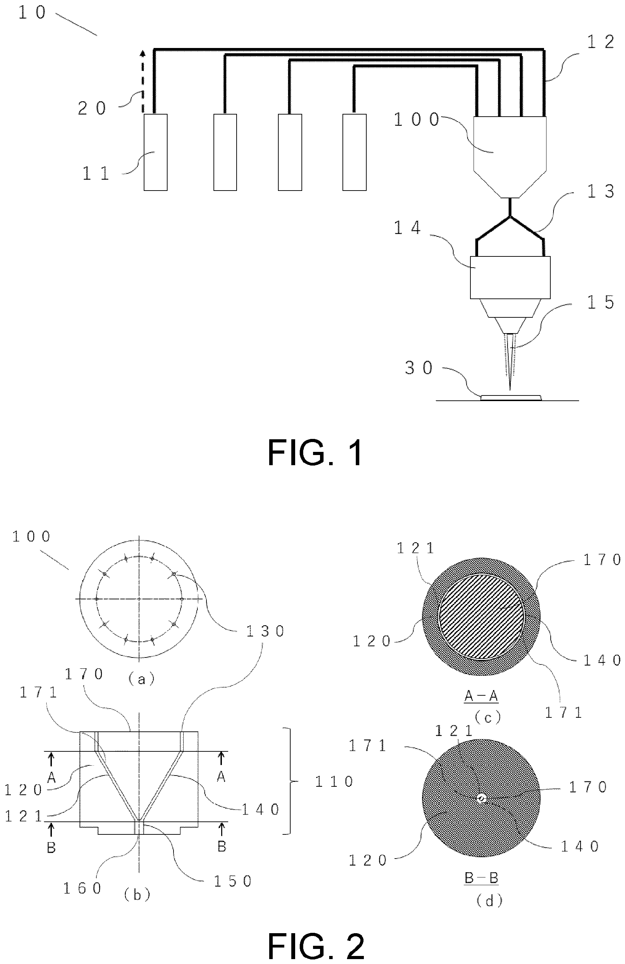

FIG. 1 shows a schematic view of an additive manufacturing device 10 provided with a mixed powder production device 100.

The additive manufacturing device 10 includes a plurality of powder supply devices 11 provided for each of a plurality of types of raw material powders 40 (hereinafter, also simply referred to as powders 40) as raw materials, the mixed powder production device 100, powder supply passages 12 connecting the powder supply devices 11 and the mixed powder production device 100, a head portion 14 that irradiates a heat source beam 15 while discharging a mixed powder 41, and mixed powder supply passages 13 connecting the head portion 14 and the mixed powder production device 100. Further, although the embodiment describes a case of using a metal deposition system including the head portion 14, a powder bed system may also be used.

When using the powder bed system, for example, instead of using the head portion 14 to discharge the mixed powder 41, the mixed powder 41 produced by the mixed powder production device 100 is deposited in a predetermined range (bed) in advance, and then the heat source beam 15 is irradiated from the head portion 14 to the deposited layer to form a solidified layer with melting and solidification. This operation may be repeated for additive manufacturing.

### [Powder]

The type of the powder 40 as a raw material is not particularly limited. As for the particle size of the powder 40, when an average particle size (D50) is about 0.1 to 100 µm, the options of the powder supply device 11 that can be selected can be increased. Here, in the metal deposition system, in an integrated distribution curve showing the relationship between the particle size and the volume integration from the small particle size side, which is obtained by a laser diffraction method, the average particle size (D50) is about 30 to 250 µm, more preferably about 60 µm to 150 µm.

### [Powder supply device]

The powder supply devices 11 can be disposed according to the number of powders 40 to be mixed, and the powders 40 are stored in the powder supply devices, respectively. Each of the powder supply devices 11 is connected to the mixed powder production device 100 by the powder supply passage 12, and pressure-feeds a preset supply amount for each of the powders 40 to the mixed powder production device 100.

The method for supplying and controlling the powders 40 is not particularly limited, but the disc type can be used.

The disc type is a system that drops the powder to be supplied into a groove or the like on a rotating plate (dish) provided below a container containing the powder, and pressure-feeds the powder to a supply passage by a pressure-feeding fluid (pressure-feeding gas). With such a system, it is easy to control the supply amount of powder stably by controlling the rotation speed of the rotating plate. Further, since the supply amount of the powder can be changed by changing the speed of the rotating plate, the mixing ratio can be rapidly changed even during the additive manufacturing, and the additive manufacturing can be performed. A pressure-feeding gas 20 such as an inert gas or compressed air is used as the medium used for pressure-feeding.

Although not shown in FIG. 1, it is preferable to provide a pressure-feeding fluid replenishment mechanism for replenishing the pressure-feeding fluid in the path of the powder supply passage 12 in order to compensate for the pressure loss of the powder supply passage 12.

### [Head portion]

The head portion 14 is connected to the mixed powder production device 100 by the mixed powder supply passage 13 for pressure-feeding the mixed powder 41. The head portion 14 is connected to an external control device, and discharges the mixed powder 41 while irradiating the heat source beam 15.

### <Mixed powder production device>

The mixed powder production device 100 according to the present invention is to be described. FIGS. 2 to 4 show an example of the mixed powder production device. Here, the mixed powder production device 100 includes the plurality of powder supply passages 12 provided for each of the powders 40, a mixing chamber 110 to which the plurality of powder supply passages 12 are connected, and a discharge passage 150 for discharging the mixed powder 41. The material of the powder supply passage 12 is not particularly limited, but a metal or resin pipeline member can be used. From the viewpoint of pressure resistance and wear resistance, for example, stainless steel or engineering plastic can be used.

The mixing chamber 110 includes a container 120 and an insertion member 170 disposed in the container 120 and having an outer wall facing an inner wall 121 of the container 120, and a gap space 140 is formed between the inner wall 121 of the container 120 and the outer wall 171 of the insertion member 170. At the upper part of the gap space 140, openings 130 each connected to the plurality of powder supply passages 12 are provided. Moreover, at the lower part of the gap space 140, the discharge passage 150 having a cross-sectional area equal to or less than the minimum cross-sectional area of the gap space 140 is provided. The discharge passage 150 is connected to a discharge opening 160. Here, one of the features of the embodiment is that the cross-sectional area of the upper part of the gap space 140 is larger than the total of the cross-sectional areas of the plurality of powder supply passages 12. Further, the cross-sectional area referred to here is a cross-sectional area in a cross section perpendicular to the direction in which the powder 40 flows, that is, the supply/discharge direction (the vertical direction).

Since the cross-sectional area of the upper part of the gap space 140 is larger than the total of the cross-sectional areas of the plurality of powder supply passages 12 (the total cross-sectional area), even if a difference in the supply amount of each of the powders 40 exists, the powders 40 can be sprayed into the gap space 140 and mixed in a desired mixing ratio without being clogged. Further, when the inside of the gap space 140 is maintained in a negative pressure state with respect to the pressure applied in the powder supply passage 12, and the powder 40 is sprayed (introduced) from the powder supply passage 12 into the gap space 140 through the opening 130, if a flow that draws the powder 40 into the gap space 140 is generated, the powder 40 can be sprayed into the gap space 140 without being clogged.

By doing so, even if a plurality of types of powders 40 are used, the mixed powder 41 in a desired mixing ratio can be accurately and quickly obtained.

Further, in order to efficiently mix the mixed powder 41, preferably, the powders 40 are sprayed so as not to collide with each other in their traveling directions (the opposite directions) or a direction close to the traveling directions so that the powders 40 can flow smoothly in the gap space 140. Specifically, for example, the outline of the cross section of the gap space 140 when viewed from the direction in which the powders 40 flow, that is, the supply/discharge direction (the vertical direction), can be a circular or polygonal annular shape.

Hereinafter, the configuration of the mixed powder production device 100 according to the first embodiment of the present invention is to be described in detail with reference to FIGS. 2 to 4. FIG. 2 is a diagram showing a schematic diagram and a partial cross-sectional view of the mixed powder production device 100 according to the first embodiment of the present invention. (a) of FIG. 2 is a diagram of the mixed powder production device 100 when viewed from the direction in which the powders 40 flow in, that is, from the upper surface side, (b) of FIG. 2 is a cross-sectional view at the center position when viewed perpendicular to the inflow direction of the powders 40, (c) of FIG. 2 is a cross-sectional view from the A-A cross section, and (d) of FIG. 2 is a cross-sectional view from the B-B cross section.

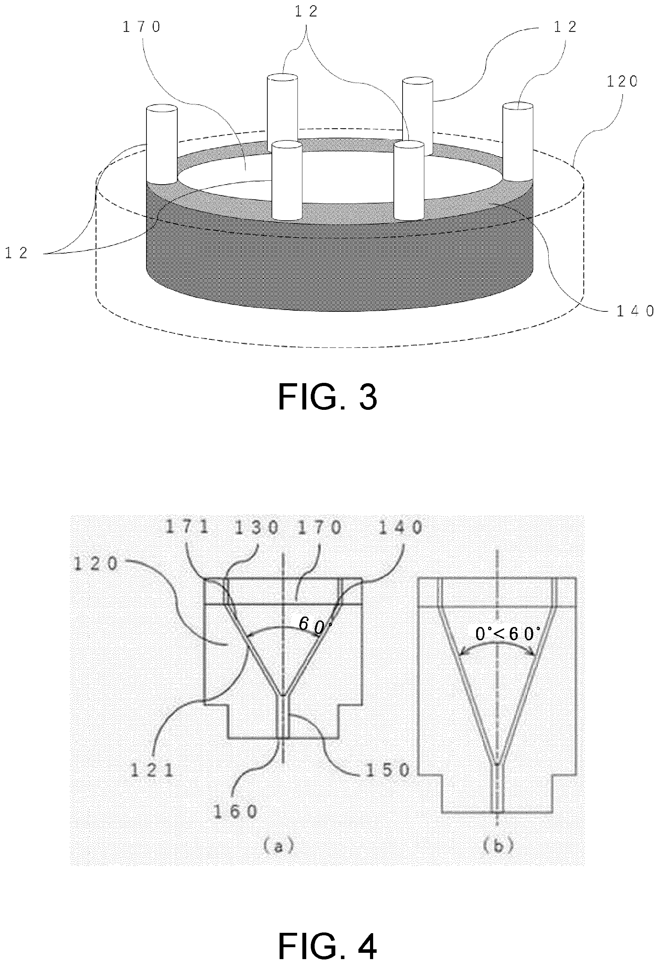

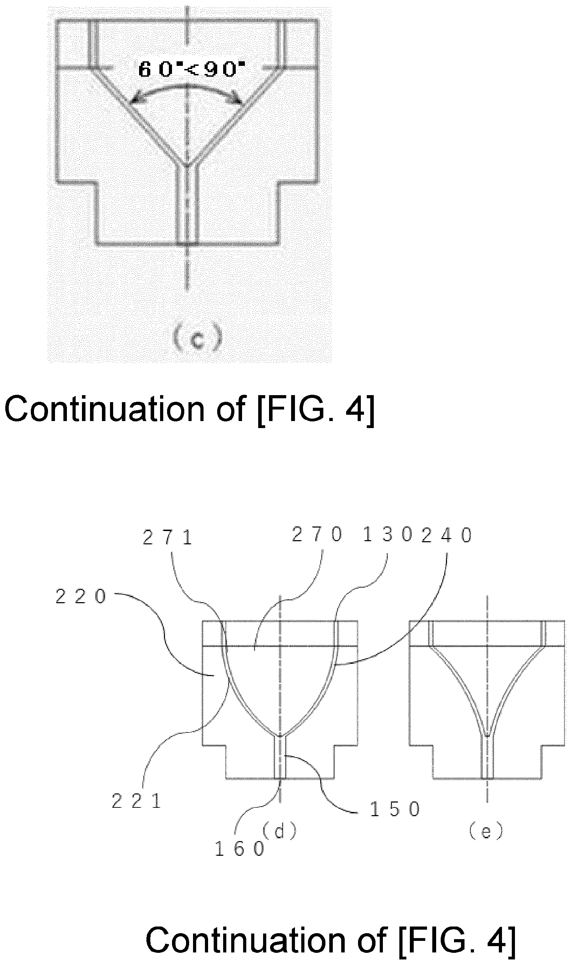

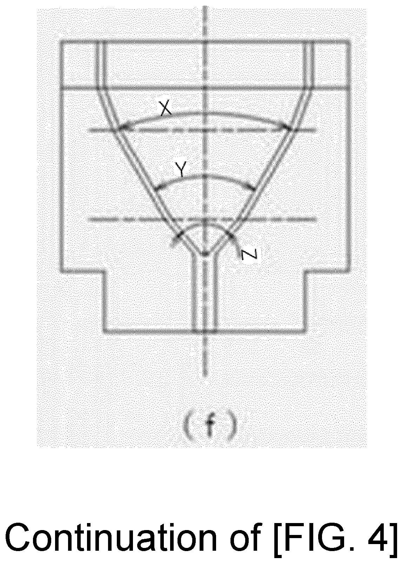

FIG. 3 is an enlarged perspective view of the upper part of the mixed powder production device 100, showing a state in which the powder supply passages 12, the openings 130 connected to the powder supply passages 12, and the gap space 140 are connected. FIG. 4 is a schematic diagram showing shape examples (a) to (b) of the gap space 140.

As shown in (a) and (b) of FIG. 2, the mixing chamber 110 includes the container 120, the insertion member 170 disposed in the container 120 and having the outer wall facing the inner wall 121 of the container 120, the gap space 140 formed between the inner wall 121 of the container 120 and the outer wall 171 of the insertion member 170, the openings 130 provided at the upper part of the gap space 140 and connected to the plurality of powder supply passages 12, and the discharge opening 160 provided at the lower part of the gap space 140 and connected to the discharge passage 150. Hereinafter, each configuration is to be described.

### [Container]

For the container 120, a metal material, a resin material, a fiber reinforced resin material, or the like can be used from the viewpoint of pressure resistance and wear resistance. Of these, the metal material such as stainless steel can be preferably used. Further, in order to allow the powders 40 flowing in the gap space 140, which is to be described later, to be pressure-fed with a smooth flow to the discharge opening 160, the smaller the surface roughness of the inner wall 121 of the container 120, the better. Specifically, for example, the arithmetic average roughness Ra is preferably Ra 12.5 µm or less, more preferably Ra 6.3 µm or less, and even more preferably Ra 1.6 µm or less.

### [Insertion member]

The shape of the insertion member 170 is to be described later. However, as for the material, a metal material, a resin material, a fiber reinforced resin material, or the like can be used from the viewpoint of pressure resistance and wear resistance. Further, in order for the powders 40 and the mixed powder 41 flowing in the container 120 to be guided without delay so as to be pressure-fed to the discharge opening 160 with a smooth flow, the smaller the surface roughness of the inner wall 121 of the container 120, the better. Specifically, for example, the arithmetic average roughness Ra is preferably Ra 12.5 µm or less, more preferably Ra 6.3 µm or less, and even more preferably Ra 1.6 µm or less.

### [Opening]

The opening 130 is an opening for introducing the powder 40 flowing in the powder supply passage 12 into the mixing chamber 110. The opening 130 is connected to the upper part of the container 120, and the number of the openings may be disposed equal to or more than the number of powder supply passages 12. As for the disposition of the openings 130, for example, as shown in FIGS. 2 and 3, the plurality of openings 130 can be disposed at rotationally symmetric positions. Further, for the opening 130 in which the pressure-feeding gas 20 and the powder 40 do not flow, the opening 130 may be appropriately sealed.

### [Gap space]

The gap space 140 is a space formed in the container 120 between the inner wall 121 of the container 120 and the outer wall 171 of the insertion member 170, the upper part is connected to the opening 130, and the lower part is connected to the discharge passage 150. Further, as shown in FIGS. 2 and 3, the gap space 140 is a place where the plurality of types of powders 40 are introduced into one space through the openings 130 connected to each of the powder supply passages 12 provided for each of the plurality of types of powders 40. That is, the gap space 140 can be rephrased as a mixing space.

The cross-sectional area of the upper part of the gap space 140 connected to the opening 130 has a cross-sectional area larger than the total cross-sectional area of the powder supply passages 12. Moreover, the cross-sectional area of the lower part of the gap space 140 connected to the discharge passage 150 may be equal to or larger than the total cross-sectional area of the powder supply passages 12. Furthermore, the wording of the "total cross-sectional area of the powder supply passages 12" as used herein means the sum of the cross-sectional areas of the hollow portions of each of the powder supply passages.

If the gap space 140 has the above characteristics, even if a difference in the supply amount of each of the powders 40 exists, the powders 40 can be introduced and mixed in the gap space 140 without being clogged, so that a mixed powder in a desired mixing ratio can be obtained even with the plurality of types of powders 40.

At this time, since mixing is performed by pressure-feeding with the pressure-feeding gas 20, a mechanical driving force like a rotating member is not required. For example, the configuration of the embodiment is also suitable for mixing powders having densities of 5 Mg/m³ or more (1.5 times or more) different from each other. In a state where the space communicates from the powder supply passage 12 to the discharge passage 150 via the gap space 140, since the powder 40 is mixed while flowing, it is possible to realize highly uniform mixture stably.

Further, in the gap space 140, it is preferable that the cross-sectional area of the upper part connected to the opening 130 is the maximum cross-sectional area, and the cross-sectional area of the lower part connected to the discharge passage 150 is the minimum cross-sectional area. Further, it is preferable that the change in cross-sectional area changes smoothly. For example, the outline of the gap space 140 is an inverted conical shape or an inverted polygonal pyramid, and it is preferable that the cross-sectional shape of the gap space 140 when viewed perpendicular to the flow direction of the powder 40 is smoothly inclined from the upper part to the lower part of the gap space 140.

Further, as shown in (c) and (d) of FIG. 2, it is preferable that the cross-sectional shape of the gap space 140 viewed from the flow direction of the powder 40 is an annular shape. In such a way, for example, even if the particle sizes and the specific gravity of the powders 40 are different, the powders 40 can be suppressed from flying in the gap space 140. Further, the powder 40 or the mixed powder 41 can be pressure-fed to the discharge passage 150 without being clogged in the gap space 140. In addition, the effect of suppressing the generation of turbulent flow of the pressure-feeding gas 20 can be expected.

The gap space 140 is formed by the inner wall 121 of the container 120 and the outer wall 171 of the insertion member 170. (a) to (c) of FIG. 4 are diagrams showing the shape of the gap space 140.

(a) to (c) of FIG. 4 show a case where the gap space 140 has an inverted conical shape, and show an example in which the angle α is changed when the diameter is expanded from the apex of the central axis of the cone toward the bottom of the cone. The specific angle may be more than 0° to less than 90°, but is preferably about 15° to 60° in order to moderate the change in the cross-sectional area. In such a way, the powders 40 can flow toward the discharge opening 160 without delay when merging in the gap space 140. Further, (a) shows a case where the apex angle is 60°, (b) shows a case where the apex angle exceeds 0° and is less than 60° (<60°), and (c) shows a case where the apex angle exceeds 60° and is less than 90° (60°<90°).

Here, (b) of FIG. 4 shows that the powder 40 can flow while sliding down in the gap space 140 by making the angle sharper and extending the gap space 140 in the flow direction of the powder 40. Further, in (c) of FIG. 4, the angle is made more obtuse and shortened in the flow direction of the powder 40, so that suppressing the pressure loss of the pressure-feeding gas 20 for pressure-feeding the powder 40 can be expected, which is effective when the number of powders 40 to be mixed is small and the powders 40 are pressured-fed at a low pressure.

Moreover, it is also possible to mix in the mixing chamber 110 without using the insertion member 170. By doing so, the mixing chamber 110 can be further miniaturized by the amount that the insertion member 170 is not inserted. When it is desired to use the insertion member 170, for example, the flow velocity (flow rate) of the pressure-feeding gas 20 for pressure-feeding the powder 40 may be reduced to prevent the powder 40 from flying up.

### [Discharge passage]

One end of the discharge passage 150 is connected to the gap space 140, and the other end is provided with a discharge opening 160 for discharging the mixed powder 41 pressure-fed from the gap space 140. Moreover, the discharge opening 160 can be connected to the mixed powder supply passage 13 and can also be used as a connection portion when the mixed powder 41 is pressure-fed to a device or the like located further downstream.

The shape of the discharge passage 150 can be, for example, equal to or less than the minimum cross-sectional area of the gap space 140. When the shape of the discharge passage is less than the minimum cross-sectional area of the gap space 140, it is preferable to avoid a sharp decrease from the minimum cross-sectional area of the gap space 140. The opening area of the discharge opening 160 can be equal to or less than the cross-sectional area of the discharge passage 150. Further, at least one discharge opening 160 may be provided, and a plurality of discharge openings 160 may be provided by branching the discharge passage 150.

### (Second Embodiment)

(d) to (f) of FIG. 4 show a gap space 240, which is another form of the gap space 140 including the inner wall 121 of the container 120 and the insertion member 170. As shown in (d) to (f) of FIG. 4, the gap space 240 may include an inner wall 221 of a container 220 and an outer wall 271 of an insertion member 270 having a shape facing the inner wall 221.

As shown in FIG. 4, the cross section when viewed vertically with respect to the flow direction of the powder 40 may have a shape other than the inverted conical shape. For example, the surface of the inner wall 221 of the container 220 may be convex toward the outside of the gap space as shown in (d) of FIG. 4, the surface of the inner wall 221 of the container 220 may be convex toward the inside of the gap space as shown in (e) of FIG. 4, or the cross section may have plural angle changes as shown in (f) of FIG. 4.

### (Third Embodiment)

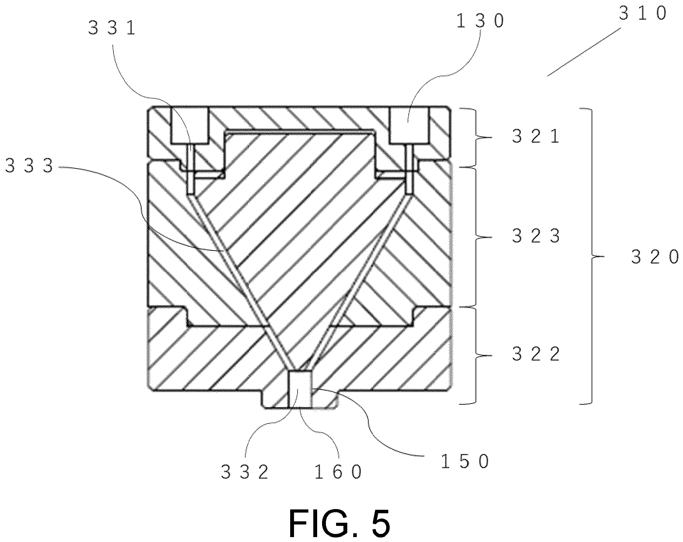

A mixing chamber 310 having a container 320 and in a different form from the mixing chamber 110 of the first embodiment is to be described. The mixing chamber 310 in the embodiment is a mixing chamber 310 that includes the container 320 composed of a combination of divided blocks. FIG. 5 shows the mixing chamber 310 including the container 320 composed of the combination of the divided blocks.

The container 320 can also form the mixing chamber 310 by joining an upper block 321 having the opening 130, a lower block 322 having the discharge opening 160, and an intermediate block 323, which are divided blocks. More specifically, for example, the upper block 321 has a cylindrical hollow portion 331 penetrating in the thickness direction that forms a part of the powder supply passages 12, and the lower block 322 may be formed with a cylindrical hollow portion 332 penetrating in the thickness direction that constitutes the discharge passage 150. The intermediate block 323 may include a funnel-shaped hollow portion 333 penetrating in the thickness direction that communicates with the cylindrical hollow portion 331 of the upper block and the cylindrical hollow portion 332 of the lower block.

By being divided in this way, for example, when the number or supply amount of the powders 40 is increased, it may be desired to increase the capacity of the gap space 140 in order to avoid collision or turbulence of the powders. Even in such a case, the volume of the gap space 140 can be easily changed by inserting a spacer between the upper block 321 having the opening 130 and the intermediate block 323. Further, for example, if the position where the inclination of the inner wall 321 of the container 320 changes is divided, the configuration and assembly of the container 320 can be simplified.

### (Fourth Embodiment)

### (Pressure replenishment mechanism)

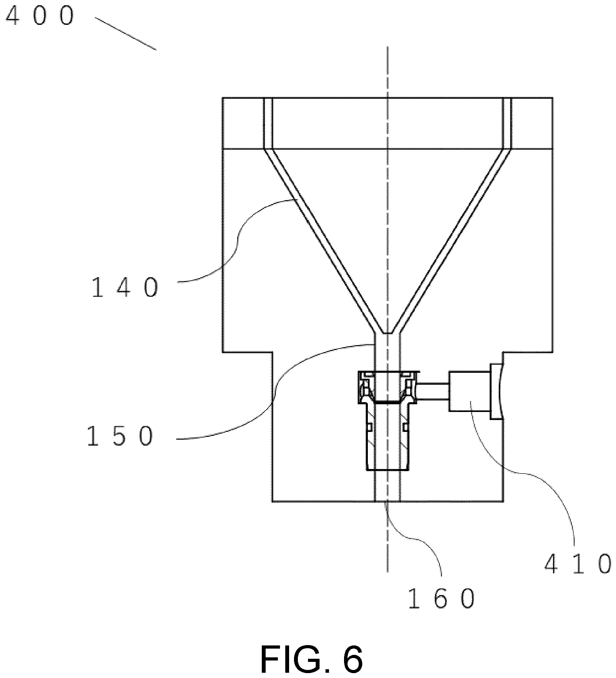

FIG. 6 shows another mixed powder production device 400 according to the embodiment. The mixed powder production device 400 differs from the mixed powder production device 100 in that a pressure replenishment mechanism 410 is provided in the discharge passage 150.

The pressure replenishment mechanism 410 is configured to control the increase in the flow rate of the pressure-feeding gas 20 for pressure-feeding the mixed powder 41 when the mixed powder 41 flowing from the gap space 140 to the discharge passage 150 is pressure-fed to the head portion 14.

The pressure replenishment mechanism 410 can be disposed between the discharge passage 150 and the discharge opening 160 and in a direction perpendicular to the discharge passage 150. The pressure replenishment mechanism 410 can introduce the pressure-feeding gas 20 into the discharge passage 150 by an arbitrary flow rate, and depending on the flow rate of the introduced pressure-feeding gas, it can be expected that the pressure inside the gap space 140 is to be more negative. Further, it can be expected that the mixed powder 41 is further pressure-fed to the head portion 14 without any delay.

### (Fifth Embodiment)

### <Mixed powder production method>

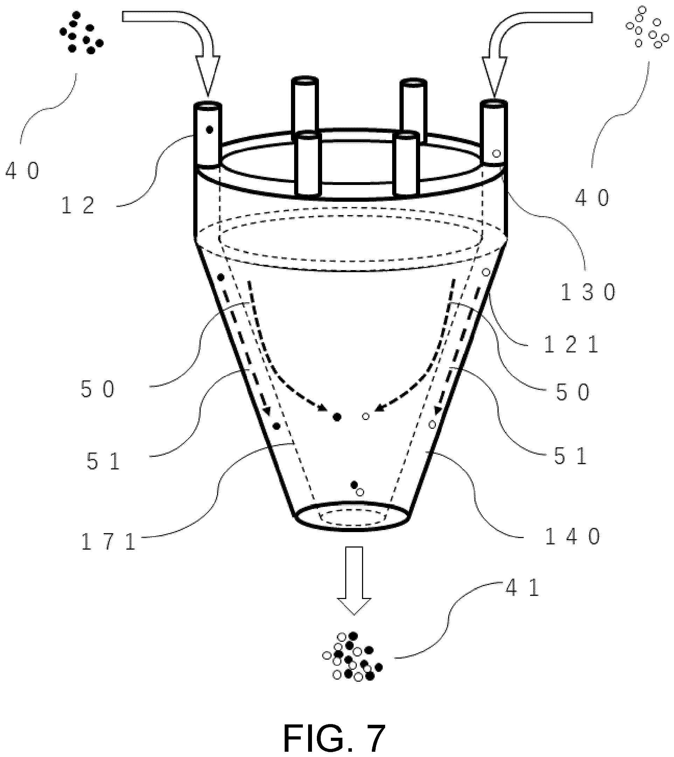

Next, an embodiment of a mixed powder production method in which the plurality of types of powders 40 are mixed to obtain the mixed powder 41 is to be described with reference to FIG. 7.

The embodiment is a mixed powder production method using a plurality of types of powders as raw materials. One of the features of the mixed powder production method lies in that the mixed powder production method includes a first step, in which a plurality of raw material powder supply passages provided respectively for each of the plurality of types of powders are used to pressure-feed the plurality of types of powders to a gap space; a second step, in which the pressure-fed plurality of types of powders are sprayed into the gap space having a cross-sectional area larger than the total of the cross-sectional areas of the plurality of raw material powder supply passages, thereby mixing the plurality of types of powders and obtaining a mixed powder; and a third step, in which the mixed powder is discharged from a discharge opening provided downstream from the gap space. Therefore, as mentioned above, in the mixed powder production device 100, the relationship is such that the total of the cross-sectional areas of the plurality of powder supply passages 12 (the total cross-sectional area) < the upper cross-sectional area of the gap space 140.

In the mixed powder production method of the embodiment, by maintaining a negative pressure state in the gap space 140 with respect to the pressure applied in the powder supply passage 12, when the powder 40 is introduced from the powder supply passage 12 into the gap space 140 through the opening 130, it can be expected that a flow that draws the powder 40 into the gap space 140 is generated. Due to this drawing flow, even if a difference in the supply amount of each of the powders 40 exists, the powders 40 can be introduced and mixed in the gap space 140 without being clogged. Therefore, a mixed powder in a desired mixing ratio can be obtained accurately and quickly even with the plurality of types of powders 40.

Since mixing is performed by pressure-feeding with the pressure-feeding gas 20, a mechanical driving force like a rotating member is not required. For example, the configuration of the embodiment is also suitable for mixing powders having densities of 5 Mg/m³ or more (1.5 times or more) different from each other. In a state where the space communicates from the powder supply passage 12 to the discharge passage 150 via the gap space 140, since the powders 40 are mixed while flowing, it is possible to realize highly uniform mixture stably. Hereinafter, each of the steps is to be described.

### (First step)

The first step is a step, in which the plurality of powder supply passages 12 provided for each of the powders 40 are used to pressure-feed the plurality of types of powders 40 to be mixed to the gap space 140.

As a method of pressure-feeding the powder 40, the pressure-feeding gas 20 can be used. The pressure-feeding gas 20 can use, for example, compressed air or an inert gas, but it is preferable to use an inert gas that can be expected to prevent oxidation, specifically, an argon gas or a nitrogen gas. The flow rate of the pressure-feeding gas can be appropriately changed by the powder supply device 11.

### (Second step)

The second step is a step, in which the plurality of types of powders 40 sprayed into the gap space 140 are mixed in the gap space 140. At this time, by spraying the powders into the gap space 140 having a cross-sectional area larger than the total of the cross-sectional areas of the plurality of powder supply passages 12, the powders can be sprayed into the gap space 140 without being clogged, and a highly uniform mixed powder can be obtained. When the powders 40 are sprayed into the gap space 140, it is preferable that the powders 40 are sprayed into and mixed in the gap space 140 having a lower atmospheric pressure than the upstream (the powder supply passage 12). In other words, the powders may be sprayed into and mixed in the gap space 140 having a low pressure, that is, the gap space 140 having a negative pressure region, with respect to the pressure applied upstream of the gap space 140 (the powder supply passage 12).

According to the invention the relationship between the total of the cross-sectional areas of the plurality of powder supply passages 12 and the cross-sectional area of the gap space 140, specifically, the ratio (S2/S1) of a cross-sectional area S2 of the gap space 140 to a total of the cross-sectional areas S1 of the plurality of powder supply passages 12 is 2 or more, preferably 20 or more, and more preferably 50 or more.

Further, the ratio (S2/S3) of the cross-sectional area S2 of the gap space 140 to an area (an opening area) S3 of the opening of the discharge opening 160 is 2 or more, preferably 20 or more, and more preferably 50 or more. Further, the ratio (S1/S3) of the total of the cross-sectional areas S1 of the plurality of powder supply passages 12 to the area S3 of the opening of the discharge opening 160 is 1.2 or more.

Further, the cross section of the gap space 140 when viewed from the flow direction of the powder 40 may have an annular shape. When the gap space 140 has an annular shape, the effect of suppressing the rising of the powders 40 sprayed into the gap space 140 and the effect of suppressing collisions of the plurality of types of powders 40 with each other in their traveling directions (the opposite directions) or a direction close to the traveling directions and gradually mixing the powders are expected. As a result, the powders 40 can flow smoothly in the gap space 140, and the mixed powder 41 can be efficiently produced. For example, as shown in FIG. 7, a flow 50 in which the powder 40 flows in the gap space 140 toward the discharge passage 150 along the shape of the gap space 140, and a flow 51 in which the powder 40 flows while spreading in the gap space 140 toward the discharge passage 150 can be formed.

### (Third step)

The third step is a step, in which the mixed powder 41 obtained in the second step is discharged by the discharge opening 160 through the discharge passage 150 provided downstream from the gap space 140. The discharge passage 150 is provided with an opening 130 serving as a discharge opening 160 at one end. Further, at least one discharge openings 160 may be provided, and a plurality of discharge openings 160 may be provided by branching the discharge passage 150.

Further, it is preferable that the cross-sectional area of the gap space 140 gradually decreases toward the discharge opening 160. For example, the shape of the gap space 140 is an inverted conical shape or an inverted polygonal pyramid, and it is preferable that the cross-sectional shape of the gap space 140 when viewed perpendicular to the flow direction of the powder 40 is smoothly inclined from the upper part to the lower part of the gap space 140.

### (Sixth Embodiment)

### <Additive manufacturing method>

Next, an additive manufacturing method for additive manufacturing using the additive manufacturing device of the embodiment is to be described.

One of the features of the additive manufacturing method using the additive manufacturing device of the embodiment lies in that the additive manufacturing method includes step A, in which a plurality of powder supply passages 12 provided for each of the plurality of types of powders 40 are used to pressure-feed the plurality of types of powders 40 to the gap space 140; step B, in which the pressure-fed plurality of types of powders 40 are sprayed into the gap space 140 having a cross-sectional area larger than the total of the cross-sectional areas of the plurality of powder supply passages 12, thereby mixing the plurality of types of powders and obtaining the mixed powder 41; step C, in which the mixed powder 41 is discharged from the discharge opening 160 provided downstream from the gap space 140 to the mixed powder supply passage 13; step D, in which the mixed powder 41 discharged from the discharge opening 160 is pressure-fed to the head portion 14 connected to the mixed powder supply passage13; and step E, in which the mixed powder 41 pressure-fed to the head portion 14 is discharged toward a molding site 30, melted, and solidified.

Then, in the additive manufacturing method of additive manufacturing using the additive manufacturing device of the embodiment, it is possible to perform additive manufacturing while accurately and quickly mixing a plurality of types of powders in a desired mixing ratio.

The system of additive manufacturing is not particularly limited, but for example, the directed energy deposition system such as laser metal deposition, a powder bed system (powder bed fusion bonding system), a plasma powder overlay, or the like can be used. Further, the heat source beam 15 can be used as the heat source for melting the mixed powder 41, and the heat source beam can be, for example, a laser beam, an electron beam, a plasma, an arc, or the like.

### (Example)

Examples are to be described in detail below. In the examples, the following was used as the mixed powder production device 100. As for the powder supply devices, two TP-Z180111VEFDR manufactured by JEOL Ltd. and two PF2/2 manufactured by GTV Co., Ltd, a total of 4 units, were used to mix 4 types of raw material powders (powder A, powder B, powder C, and powder D). The supply amount of the raw material powder and the flow rate of the pressure-feeding gas were set for each of the four powder supply devices to set the total flow rate of the pressure-feeding gas to 6.0L.

The mixed powder production device used resin tubes with an inner diameter of 2.5 mm and an inner diameter of 4 mm for the powder supply passage, and a member having an inverted conical apex angle of 60° and an outer wall surface having an arithmetic average roughness of Ra 1.6 µm or less for the insertion member.

The mixing chamber had an inverted conical inner wall facing the inverted conical insertion member, and was configured by connecting an upper block having four openings with an inner diameter of 2.0 mm, a lower block having a discharge opening with a diameter of 6.0 mm, and an intermediate block connecting the opening to the discharge opening. As shown in FIG. 5, the upper block is formed with a cylindrical hollow portion that forms a part of the powder supply passage and penetrates in the thickness direction, and the lower block is formed with a cylindrical hollow portion that forms a discharge passage and penetrates in the thickness direction. The intermediate block includes a funnel-shaped hollow portion that penetrates in the thickness direction and communicates with the cylindrical hollow portion of the upper block and the cylindrical hollow portion of the lower block. Moreover, the material of each of the blocks was stainless steel (SUS303), and the arithmetic average roughness of the surface in contact with the raw material powder was Ra 1.6 µm or less.

Regarding the gap space formed by the inner wall of the container and the outer wall of the insertion member used in the embodiment, the upper end of the gap space had a maximum cross-sectional area, and the cross-sectional area S2 was 364 mm². Furthermore, the total of the cross-sectional areas of the powder supply passages (the total cross-sectional area) S1 could be calculated as (2.5/2)² × π × 2 (number of openings) + (4/2)² × π × 2 (number of openings) = 35.0 mm², and the opening area S3 of the discharge opening could be calculated as 28.3 mm². That is, it was confirmed that the ratio (S2/S1) of the total of the cross-sectional areas S1 of the powder supply passages to the cross-sectional area S2 of the gap space was 10, and that the ratio (S2/S3) of the area (the opening area) S3 of the opening of the discharge opening to the cross-sectional area S2 of the gap space was 13. Further, the ratio (S1/S3) of the opening area S3 of the discharge opening 160 to the total of the cross-sectional areas S1 of the plurality of powder supply passages 12 was 1.2.

### (Raw material powder and its supply conditions)

In the example, four types of raw material powders (hereinafter, powders A to D) shown in Table 1 were prepared.

**[Table 1]**

| | Powder A | Powder B | Powder C | Powder D |
|---|---|---|---|---|
| Type of material | WC-30%Co-Cr | Cu | 718 alloy | Hot tool steel |
| Specific gravity (Mg/m³) | 12.22 | 8.75 | 8.06 | 7.74 |
| Average particle size d50 (µm) | 80 | 80 | 80 | 80 |

### (Example 1)

The supply amounts of the powders A to D were respectively set by the powder supply device prepared for each of the powders A to D. As for each of the supply amounts, powder A was 6.3 g/min, powder B was 1.2 g/min, powder C was 2.4 g/min, and powder D was 6.0 g/min (the total supply amount of the powders A to D: 15.9 g/min). Argon gas was used as the pressure-feeding gas. The supply pressure of argon gas was set to be constant at 0.4 MPa (gauge pressure), and the flow rate of the pressure-feeding gas (argon gas) was set to 2.0 L/min for the powders A and B, and 0.3 L/min for the powder C and the powder D.

### (Examples 2 to 4)

In addition, in Examples 2 to 4, the cases where the supply amounts of the powders A to D were changed while the type of the pressure-feeding gas, the supply pressure of the pressure-feeding gas, and the flow rate of the pressure-feeding gas remained the same as in Example 1 were implemented. In Example 2, the supply amounts of powders A to D were set to powder A: 6.3 g/min, powder B: 1.2 g/min, powder C: 1.0 g/min, and powder D: 3.5 g/min, and the total was 12.0 g/min. In Example 3, the supply amounts of powders A to D were set to powder A: 1.3 g/min, powder B: 4.2 g/min, powder C: 4.5 g/min, and powder D: 6.0 g/min, and the total was 16.0 g/min. In Example 4, the supply amounts of powders A to D were set to powder A: 1.3 g/min, powder B: 4.2 g/min, powder C: 3.6 g/min, and powder D: 3.5 g/min, and the total was 12.6 g/min. As described above, Table 2 shows the conditions of Examples 1 to 4.

### (Comparative Example 1)

Further, as a comparative example, two types of powder C and powder D were mixed using a one-touch tube fitting KQ2 series Different Diameter Double Union Y (model: KQ2U04-06A) manufactured by SMC Corporation. The relationships between the cross-sectional areas at this time were that the total of the cross-sectional areas S 1 of the powder supply passages was 4π (mm²) × 2 (openings) = 25.1 mm², the cross-sectional area S2 of the confluence portion was 7.1 mm², and the area (the opening area) S3 of the opening of the discharge opening was 28.3 mm². That is, the ratio (S2/S1) of the total of the cross-sectional areas S1 of the powder supply passages to the cross-sectional area S2 of the confluence portion was 0.28, and the ratio (S2/S3) of the opening area S3 of the discharge opening to the cross-sectional area S2 of the confluence portion was 0.25. Further, the ratio (S1/S3) of the opening area S3 of the discharge opening 160 to the total of the cross-sectional areas S1 of the plurality of powder supply passages 12 was 0.89.

The supply amount of powder C was 2.5 g/min, the supply amount of powder D was 7.0 g/min, and the total supply amount was 9.5 g/min. Argon gas was used as the pressure-feeding gas, the supply pressure was set to be constant at 0.4 MPa (gauge pressure), and the flow rate of the argon gas was set to 5.7 L/min for the powder C, and 0.3 L/min for the powder D. As described above, Table 3 shows the conditions of Comparative Example.

### (Evaluation method of discharge amount)

In the example, the mixed powder obtained by mixing the powders was discharged from the head portion, and the amount of the mixed powder (hereinafter referred to as the total discharge amount) was measured and evaluated. Regarding Examples 1 to 4, specifically, the powders A to D were supplied to the mixed powder production device and discharged from the head portion. More specifically, the powders A to D were pressure-fed from the mixed powder supply device to the mixed powder production device with argon gas and then mixed in the mixed powder production device to form the mixed powder, the mixed powder was pressure-fed to the head portion, and the mixed powder was discharged toward the measuring container provided below the head portion.

The total discharge amount was measured by measuring the weight change of the measuring container with a measuring instrument (an electronic balance) provided under the measuring container. The measurement cycle was about 0.25s, and the average value for 100 seconds was measured. The results are shown in Table 2. In addition, the measured weight change was further differentiated, the converted value was calculated so that the supply amount (g/min) per minute was obtained from the differentiated value, and evaluation was performed with the vertical axis as the total discharge amount (g/min) and the horizontal axis as the elapsed time (s). Moreover, Comparative Example was also measured and evaluated in the same manner.

### (Result)

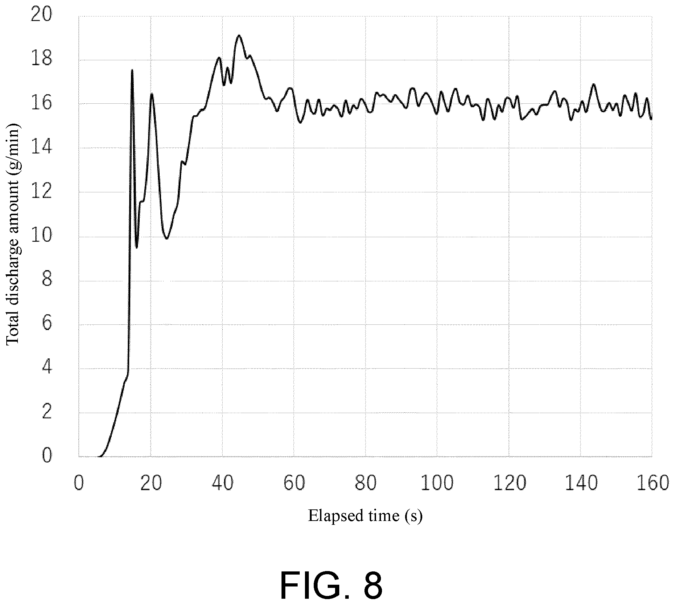

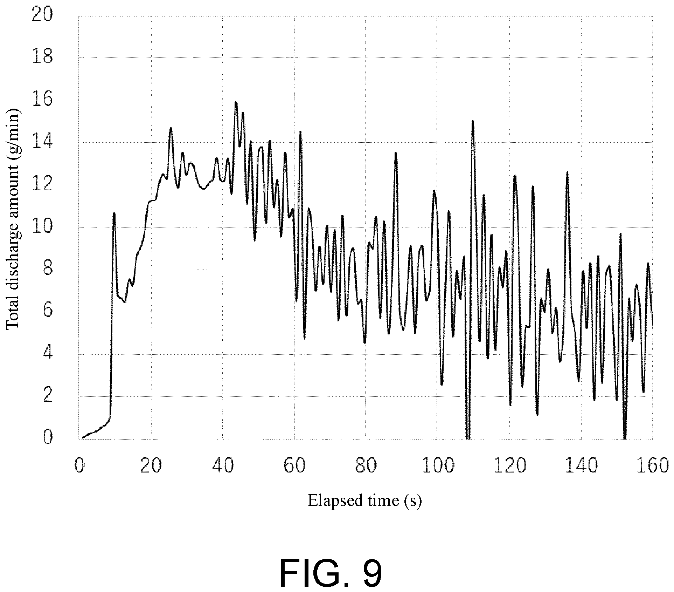

Table 2 shows the measurement results of the total discharge amount for each of the examples, and Table 3 shows the measurement results of Comparative Example 1. Further, FIG. 8 shows the change over time of the total discharge amount of each of the powders in Example 1 for each sampling cycle, and FIG. 9 shows the change over time of the powder discharge amount in Comparative Example 1 for each sampling cycle.

In Examples 1 to 4, as shown in Table 2 and FIG. 8, since the difference between the average value and the target value for 100s in the steady state (60s or later) is 0.6g at the maximum, it was confirmed that the powders could be mixed with high accuracy. In addition, since the change in the supply amount in the steady state (60s or later) is within 10% of the supply amount, even in the case of long-term operation, a mixed powder having a desired mixing ratio could be obtained.

Further, it could be confirmed that, even in the cases of Examples 2 to 4 in which the mixing ratio of the powders A to D was changed while the flow rate of argon gas for each of the powders was kept under the same conditions as in Example 1, the average value of the total discharge amount is still close to the total value (target value) of each supply amount, that is, the mixed powder having a desired mixing ratio can be obtained without being affected by the difference in the properties (specific gravity, etc.) of the powder. Specifically, it could be confirmed that powders having different densities of 5 Mg/m³ or more (1.5 times or more) can be stably mixed.

Conversely, in Comparative Example 1, as shown in Table 3 and FIG. 9, the total discharge amount was not stable, and the average value of the total discharge amount for 100s could not be calculated. In addition, the obtained result is that the spray amount gradually decreases.

**[Table 2]**

| | Flow rate of argon gas (L/min) | Supply amount (g/min) | | | |
|---|---|---|---|---|---|
| | | Example 1 | Example 2 | Example 3 | Example 4 |
| Powder A | 2.0 | 6.3 | 6.3 | 1.3 | 1.3 |
| Powder B | 2.0 | 1.2 | 1.2 | 4.2 | 4.2 |
| Powder C | 0.3 | 2.4 | 1.0 | 4.5 | 3.6 |
| Powder D | 0.3 | 6.0 | 3.5 | 6.0 | 3.5 |
| Target value of total discharge amount | | 15.9 | 12.0 | 16.0 | 12.6 |
| Actual measured value of total discharge amount (average value for 100s) | | 16.0 | 12.1 | 16.6 | 12.6 |

**[Table 3]**

| | Flow rate of argon gas (L/min) | Supply amount (g/min) |
|---|---|---|
| | | Comparative Example 1 |
| Powder C | 5.7 | 2.5 |
| Powder D | 0.3 | 7.0 |
| Target value of total discharge amount | | 9.5 |
| Actual measured value of total discharge amount (average value for 100s) | | There is a lot of variation and it cannot be measured |

### Reference Signs List

10: Additive manufacturing device
11: Powder supply device
12: Powder supply passage
13: Mixed powder supply passage
14: Head portion
15: Heat source beam
20: Pressure-feeding gas
30: Molding site
40: Powder
41: Mixed powder
50: Flow
51: Flow
100: Mixed powder production device
110: Mixing chamber
120: Container
121: Inner wall
   130: Opening
   140: Gap space
   150: Discharge passage
   160: Discharge opening
   170: Insertion member
   171: Outer wall
   220: Container
   221: Inner wall
   240: Gap space
   270: Insertion member
   271: Outer wall
310: Mixing chamber
320: Container
321: Upper block
322: Lower block
   323: Intermediate block
   331: Cylindrical hollow portion
   332: Cylindrical hollow portion
   333: Funnel-shaped hollow portion
   400: Mixed powder production device
   410: Pressure replenishment mechanism

## Claims

1. A mixed powder production method for producing a mixed powder with a plurality of types of powders as raw materials, comprising:
a first step of pressure-feeding the plurality of types of powders to a gap space (140) by using a plurality of raw material powder supply passages (12) provided respectively for each of the plurality of types of powders;
a second step of spraying the pressure-fed plurality of types of powders into the gap space (140) having a cross-sectional area larger than a total of cross-sectional areas of the plurality of raw material powder supply passages (12), mixing the plurality of types of powders, and obtaining the mixed powder; and
a third step of discharging the mixed powder from a discharge opening (160) provided downstream from the gap space (140);
wherein the mixed powder production method is **characterized in that**,
a ratio (S2/S1) of the cross-sectional area (S2) of the gap space (140) to the total of cross-sectional areas (S1) of the plurality of raw material powder supply passages (12) is 2 or more;
a ratio (S2/S3) of the cross-sectional area (S2) of the gap space (140) to an opening area (S3) of the discharge opening (160) is 2 or more;
a ratio (S1/S3) of the total of cross-sectional areas (S1) of the plurality of raw material powder supply passages (12) to the opening area (S3) of the discharge opening (160) is 1.2 or more.

2. A mixed powder production device (100) for producing a mixed powder with a plurality of types of powders as raw materials, comprising:
a plurality of raw material powder supply passages (12) provided respectively for each of the plurality of types of powders;
a mixing chamber (110) to which the plurality of raw material powder supply passages (12) are connected; and
a discharge passage (150) comprising a discharge opening (160) for discharging the mixed powder,
wherein the mixing chamber (110) comprises:
a container (120);
an insertion member (170) disposed in the container (120) and having an outer wall (171) facing an inner wall (121) of the container (120);
a gap space (140) formed between the inner wall (121) of the container (120) and the outer wall (171) of the insertion member (170); and
openings (130) respectively connected to the plurality of raw material powder supply passages (12) at an upper part of the gap space (140),
wherein the discharge passage (150) is connected to a lower part of the gap space (140),
wherein the gap space (140) is connected to the openings (130), and a cross-sectional area of the gap space (140) is larger than a total of cross-sectional areas of the plurality of raw material powder supply passages (12);
wherein the mixed powder production device (100) is **characterized in that**,
a ratio (S2/S1) of the cross-sectional area (S2) of the gap space (140) to the total of cross-sectional areas (S1) of the plurality of raw material powder supply passages (12) is 2 or more;
a ratio (S2/S3) of the cross-sectional area (S2) of the gap space (140) to an opening area (S3) of the discharge opening (160) is 2 or more;
a ratio (S1/S3) of the total of cross-sectional areas (S1) of the plurality of raw material powder supply passages (12) to the opening area (S3) of the discharge opening (160) is 1.2 or more.

3. The mixed powder production device (100) according to claim 2, wherein surface roughness of the inner wall (121) of the container (120) has an arithmetic average roughness of Ra 12.5 µm or less, and
surface roughness of the outer wall (171) of the insertion member (170) has an arithmetic average roughness of Ra 12.5 µm or less.

4. An additive manufacturing device (10) for additive manufacturing using a mixed powder with a plurality of types of powders as raw materials, the additive manufacturing device (10) comprising:
a powder supply device (11) provided for each of the plurality of types of powders;
the mixed powder production device (100) according to claim 2, which mixes the plurality of types of powders to produce the mixed powder; and
a head portion (14) irradiating a heat source beam (15) toward a molding site (30),
wherein the powder supply device (11) is connected to the plurality of raw material powder supply passages (12) provided respectively for each of the powders,
wherein the head portion (14) is connected to the discharge passage (150) by a mixed powder supply passage (13) that conveys the mixed powder.

5. An additive manufacturing method, comprising:
a step of pressure-feeding a plurality of types of powders to a gap space (140) by using a plurality of raw material powder supply passages (12) provided respectively for each of the plurality of types of powders;
a step of spraying the pressure-fed plurality of types of powders into the gap space (140) having a cross-sectional area larger than a total of cross-sectional areas of the plurality of raw material powder supply passages (12), mixing the plurality of types of powders, and obtaining a mixed powder;
a step of discharging the mixed powder from a discharge opening (160) provided downstream from the gap space (140) to a mixed powder supply passage (13);
a step of pressure-feeding the mixed powder discharged from the discharge opening (160) to a head portion (14) connected to the mixed powder supply passage (13); and
a step of discharging the mixed powder pressure-fed to the head portion (14) toward a molding site (30), and melting and solidifying the mixed powder;
wherein the additive manufacturing method is **characterized in that**,
a ratio (S2/S1) of the cross-sectional area (S2) of the gap space (140) to the total of cross-sectional areas (S1) of the plurality of raw material powder supply passages (12) is 2 or more;
a ratio (S2/S3) of the cross-sectional area (S2) of the gap space (140) to an opening area (S3) of the discharge opening (160) is 2 or more;
a ratio (S1/S3) of the total of cross-sectional areas (S1) of the plurality of raw material powder supply passages (12) to the opening area (S3) of the discharge opening (160) is 1.2 or more.

## Patentansprüche

1. Mischpulver-Herstellungsverfahren zur Herstellung eines Mischpulvers mit einer Vielzahl von Pulvertypen als Rohmaterialien, umfassend:
einen ersten Schritt der Druckzufuhr der Vielzahl Pulvertypen in einen Spaltraum (140) unter Verwendung einer Vielzahl von Rohmaterial-Pulverzufuhrkanäle (12), die jeweils für jede der Vielzahl von Pulvertypen bereitgestellt sind;
einen zweiten Schritt des Sprühens der unter Druck zugeführten Vielzahl von Pulvertypen in den Spaltraum (140) mit einer Querschnittsfläche, die größer ist als eine Gesamtheit der Querschnittsflächen der Vielzahl von Rohmaterial-Pulverzufuhrkanälen (12), des Mischens der Vielzahl von Pulvertypen und des Erhaltens des Mischpulvers; und
einen dritten Schritt des Auslassen des Mischpulvers aus einer Auslassöffnung (160), die stromabwärts von dem Spaltraum (140) bereitgestellt ist;
wobei das Verfahren zur Herstellung des Mischpulvers **dadurch gekennzeichnet ist, dass**,
ein Verhältnis (S2/S1) der Querschnittsfläche (S2) des Spaltraums (140) zu der Gesamtheit der Querschnittsflächen (S1) der Vielzahl von Rohmaterial-Pulverzufuhrkanälen (12) 2 oder mehr beträgt;
ein Verhältnis (S2/S3) der Querschnittsfläche (S2) des Spaltraums (140) zu einer Öffnungsfläche (S3) der Auslassöffnung (160) 2 oder mehr beträgt;
ein Verhältnis (S1/S3) der Gesamtheit der Querschnittsflächen (S1) der Vielzahl von Rohmaterial- Pulverzufuhrkanälen (12) zu der Öffnungsfläche (S3) der Auslassöffnung (160) 1,2 oder mehr beträgt.

2. Mischpulver-Herstellungsvorrichtung (100) zur Herstellung eines Mischpulvers mit einer Vielzahl von Pulvertypen als Rohmaterialien, umfassend:
eine Vielzahl von Rohmaterial-Pulverzufuhrkanälen (12), die jeweils für jede der Vielzahl von Pulvertypen bereitgestellt sind;
eine Mischkammer (110), mit der die Vielzahl von Rohmaterial-Pulverzufuhrkanälen (12) verbunden sind; und
einen Auslasskanal (150) mit einer Auslassöffnung (160) zum Auslassen des Mischpulvers,
wobei die Mischkammer (110) umfasst:
einen Behälter (120);
ein Einführelement (170), das in dem Behälter (120) angeordnet ist und eine Außenwand (171) aufweist, die einer Innenwand (121) des Behälters (120) gegenüberliegt;
einen spaltraum (140), der zwischen der Innenwand (121) des Behälters (120) und der Außenwand (171) des Einführelements (170) ausgebildet ist; und
Öffnungen (130), die jeweils mit der Vielzahl von Rohmaterial-Pulverzufuhrkanälen (12) an einem oberen Teil des Spaltraums (140) verbunden sind,
wobei der Auslasskanal (150) mit einem unteren Teil des Spaltraums (140) verbunden ist,
wobei der Spaltraum (140) mit den Öffnungen (130) verbunden ist und eine Querschnittsfläche des Spaltraums (140) größer ist als die Gesamtheit der Querschnittsflächen der Vielzahl von Rohmaterial-Pulverzufuhrkanälen (12);
wobei die Mischpulver-Herstellungsvorrichtung (100) **dadurch gekennzeichnet ist, dass**,
ein Verhältnis (S2/S1) der Querschnittsfläche (S2) des Spaltraums (140) zu der Gesamtheit der Querschnittsflächen (S1) der Vielzahl von Rohmaterial-Pulverzufuhrkanälen (12) 2 oder mehr beträgt;
ein Verhältnis (S2/S3) der Querschnittsfläche (S2) des Spaltraums (140) zu einer Öffnungsfläche (S3) der Auslassöffnung (160) 2 oder mehr beträgt;
ein Verhältnis (S1/S3) der Gesamtheit der Querschnittsflächen (S1) der Vielzahl von Rohmaterial-Pulverzufuhrkanälen (12) zu der Öffnungsfläche (S3) der Auslassöffnung (160) 1,2 oder mehr beträgt.

3. Mischpulver-Herstellungsverfahren (100) gemäß Anspruch 2, wobei die Oberflächenrauheit der Innenwand (121) des Behälters (120) eine arithmetische Durchschnittsrauheit von Ra 12,5 µm oder weniger aufweist und
die Oberflächenrauheit der Außenwand (171) des Einführelements (170) eine arithmetische Durchschnittsrauheit von Ra 12,5 µm oder weniger aufweist.

4. Additive Herstellungsvorrichtung (10) zur additiven Herstellung unter Verwendung eines Mischpulvers mit einer Vielzahl von Pulvertypen als Rohmaterialien, wobei die additive Herstellungsvorrichtung (10) umfasst:
eine Pulverzufuhrvorrichtung (11), die für jede der Vielzahl von Pulvertypen bereitgestellt ist;
die Mischpulver-Herstellungsvorrichtung (100) gemäß Anspruch 2, die die Vielzahl von Pulvertypen mischt, um das Mischpulver herzustellen; und
einen Kopfabschnitt (14), der einen Wärmequellenstrahl (15) in Richtung einer Ausformungsstelle (30) abstrahlt,
wobei die Pulverzufuhrvorrichtung (11) mit der Vielzahl von Rohmaterial-Pulverzufuhrkanälen (12) verbunden ist, die jeweils für jedes der Pulver bereitgestellt sind,
wobei der Kopfabschnitt (14) mit dem Auslasskanal (150) durch einen Mischpulver-Zufuhrkanal (13) verbunden ist, der das Mischpulver fördert.

5. Verfahren zur additiven Herstellung, umfassend:
einen Schritt der Druckzufuhr einer Vielzahl von Pulvertypen in einen Spaltraum (140) unter Verwendung einer Vielzahl von Rohmaterial-Pulverzufuhrkanälen (12), die jeweils für jede der Vielzahl von Pulvertypen bereitgestellt sind;
einen Schritt des Sprühens der unter Druck zugeführten Vielzahl von Pulvertypen in den Spaltraum (140) mit einer Querschnittsfläche, die größer ist als eine Gesamtheit der Querschnittsflächen der Vielzahl von Rohmaterial-Pulverzufuhrkanälen (12), des Mischens der Vielzahl von Pulvertypen und des Erhaltens eines Mischpulvers;
einen Schritt des Auslassens des Mischpulvers aus einer Auslassöffnung (160), die stromabwärts von dem Spaltraum (140) bereitgestellt ist, zu einem Mischpulver-Zufuhrkanal (13);
einen Schritt der Druckzufuhr des Mischpulvers, das aus der Auslassöffnung (160) ausgelassen wird, zu einem Kopfabschnitt (14), der mit dem Mischpulver-Zufuhrkanal (13) verbunden ist; und
einen Schritt des Auslassens des Mischpulvers, das dem Kopfabschnitt (14) unter Druck zugeführt wird, in Richtung einer Ausformungsstelle (30) und des Schmelzens und Verfestigens des Mischpulvers;
wobei das Verfahren zur additiven Herstellung **dadurch gekennzeichnet ist, dass**,
ein Verhältnis (S2/S1) der Querschnittsfläche (S2) des Spaltraums (140) zu der Gesamtheit der Querschnittsflächen (S1) der Vielzahl von Rohmaterial-Pulverzufuhrkanälen (12) 2 oder mehr beträgt;
ein Verhältnis (S2/S3) der Querschnittsfläche (S2) des Spaltraums (140) zu einer Öffnungsfläche (S3) der Auslassöffnung (160) 2 oder mehr beträgt;
ein Verhältnis (S1/S3) der Gesamtheit der Querschnittsflächen (S1) der Vielzahl von Rohmaterial- Pulverzufuhrkanälen (12) zu der Öffnungsfläche (S3) der Auslassöffnung (160) 1,2 oder mehr beträgt.

## Revendications

1. Procédé de production de poudre mélangée pour la production d'une poudre mélangée avec une pluralité de types de poudres en tant que matières premières, comprenant :
une première étape consistant à alimenter sous pression la pluralité de types de poudres dans un espace vide (140) en utilisant une pluralité de passages d'alimentation (12) de poudres en tant que matières premières prévus respectivement pour chacun de la pluralité de types de poudres ;
une deuxième étape consistant à pulvériser la pluralité de types de poudres alimentés sous pression dans l'espace vide (140) ayant une zone de section transversale supérieure à un total de zones de section transversale de la pluralité de passages d'alimentation (12) de poudres en tant que matières premières, mélanger la pluralité de types de poudres et obtenir la poudre mélangée ; et
une troisième étape consistant à décharger la poudre mélangée depuis une ouverture de décharge (160) prévue en aval de l'espace vide (140) ;
dans lequel le procédé de production de poudre mélangée est **caractérisé en ce que**,
un rapport (S2/S1) de la zone de section transversale (S2) de l'espace vide (140) au total des zones de section transversale (S1) de la pluralité de passages d'alimentation (12) de poudres en tant que matières premières est supérieur ou égal à 2 ;
un rapport (S2/S3) de la zone de section transversale (S2) de l'espace vide (140) à une zone d'ouverture (S3) de l'ouverture de décharge (160) est supérieur ou égal à 2 ;
un rapport (S1/S3) du total des zones de section transversale (S1) de la pluralité de passages d'alimentation (12) de poudres de matières premières à une zone d'ouverture (S3) de l'ouverture de décharge (160) est supérieur ou égal à 1,2.

2. Dispositif de production de poudre mélangée (100) pour la production d'une poudre mélangée avec une pluralité de types de poudres en tant que matières premières, comprenant :
une pluralité de passages d'alimentation (12) de poudres en tant que matières premières prévus respectivement pour chacun de la pluralité de types de poudres ;
une chambre de mélange (110) à laquelle la pluralité de passages d'alimentation (12) de poudres en tant que matières premières sont reliés ; et
un passage de décharge (150) comprenant une ouverture de décharge (160) pour décharger la poudre mélangée,
dans lequel la chambre de mélange (110) comprend :
un contenant (120) ;
un élément d'insertion (170) disposé dans le contenant (120) et ayant une paroi externe (171) faisant face à une paroi interne (121) du contenant (120) ;
un espace vide (140) formé entre la paroi interne (121) du contenant (120) et la paroi externe (171) de l'élément d'insertion (170) ; et
des ouvertures (130) respectivement reliées à la pluralité de passages d'alimentation (12) de poudres en tant que matières premières au niveau d'une partie supérieure de l'espace vide (140),
dans lequel le passage de décharge (150) est relié à une partie inférieure de l'espace vide (140),
dans lequel l'espace vide (140) est relié aux ouvertures (130), et une zone de section transversale de l'espace vide (140) est supérieure à un total des zones de section transversale de la pluralité de passages d'alimentation (12) de poudres en tant que matières premières ;
dans lequel le dispositif de production de poudre mélangée (100) est **caractérisé en ce que**,
un rapport (S2/S1) de la zone de section transversale (S2) de l'espace vide (140) au total des zones de section transversale (S1) de la pluralité de passages d'alimentation (12) de poudres en tant que matières premières est supérieur ou égal à 2 ;
un rapport (S2/S3) de la zone de section transversale (S2) de l'espace vide (140) à une zone d'ouverture (S3) de l'ouverture de décharge (160) est supérieur ou égal à 2 ;
un rapport (S1/S3) du total des zones de section transversale (S1) de la pluralité de passages d'alimentation (12) de poudres de matières premières à une zone d'ouverture (S3) de l'ouverture de décharge (160) est supérieur ou égal à 1,2.

3. Dispositif de production de poudre mélangée (100) selon la revendication 2, dans lequel la rugosité de surface de la paroi interne (121) du contenant (120) a une rugosité moyenne arithmétique Ra inférieure ou égale à 12,5 µm, et
la rugosité de surface de la paroi externe (171) de l'élément d'insertion (170) a une rugosité moyenne arithmétique Ra inférieure ou égale à 12,5 µm.

4. Dispositif de fabrication additive (10) pour la fabrication additive en utilisant une poudre mélangée avec une pluralité de types de poudres en tant que matières premières, le dispositif de fabrication additive (10) comprenant :
un dispositif d'alimentation de poudre (11) prévu pour chacun de la pluralité de types de poudres ;
le dispositif de production de poudre mélangée (100) selon la revendication 2, qui mélange la pluralité de types de poudres pour produire la poudre mélangée ; et
une partie de tête (14) irradiant un faisceau de source de chaleur (15) vers un site de moulage (30),
dans lequel le dispositif d'alimentation de poudre (11) est relié à la pluralité de passages d'alimentation (12) de poudres en tant que matières premières prévus respectivement pour chacune des poudres,
dans lequel la partie de tête (14) est reliée au passage de décharge (150) par un passage d'alimentation (13) de poudre mélangée qui transporte la poudre mélangée.

5. Procédé de fabrication additive, comprenant ;
une étape consistant à alimenter sous pression une pluralité de types de poudres dans un espace vide (140) en utilisant une pluralité de passages d'alimentation (12) de poudres en tant que matières premières prévus respectivement pour chacun de la pluralité de types de poudres ;
une étape consistant à pulvériser la pluralité de types de poudres alimentés sous pression dans l'espace vide (140) ayant une surface de section transversale supérieure à un total des surfaces de section transversale de la pluralité de passages d'alimentation (12) de poudres en tant que matières premières, mélanger la pluralité de types de poudres et obtenir une poudre mélangée ;
une étape consistant à décharger la poudre mélangée depuis une ouverture de décharge (160) prévue en aval de l'espace vide (140) vers un passage d'alimentation (13) de poudre mélangée ;
une étape consistant à alimenter sous pression la poudre mélangée déchargée depuis l'ouverture de décharge (160) vers une partie de tête (14) reliée au passage d'alimentation (13) de poudre mélangée ; et
une étape consistant à décharger la poudre mélangée alimentée sous pression dans la partie de tête (14) vers un site de moulage (30) et à faire fondre et solidifier la poudre mélangée ;
dans lequel le dispositif de fabrication additive est **caractérisé en ce que**,
un rapport (S2/S1) de la zone de section transversale (S2) de l'espace vide (140) au total des zones de section transversale (S1) de la pluralité de passages d'alimentation (12) de poudres en tant que matières premières est supérieur ou égal à 2 ;
un rapport (S2/S3) de la zone de section transversale (S2) de l'espace vide (140) à une zone d'ouverture (S3) de l'ouverture de décharge (160) est supérieur ou égal à 2 ;
un rapport (S1/S3) du total des zones de section transversale (S1) de la pluralité de passages d'alimentation (12) de poudres de matières premières à une zone d'ouverture (S3) de l'ouverture de décharge (160) est supérieur ou égal à 1,2.
